# EUROPÄISCHE PATENTSCHRIFT

(11) **EP 2 691 220 B1**
(45) Veröffentlichungstag und Bekanntmachung des Hinweises auf die Patenterteilung: **18.05.2016**
(21) Anmeldenummer: 12717624.6
(22) Anmeldetag: 29.03.2012
(51) Int. Cl.: B22D 17/26, B29C 49/56, B30B 1/32, F15B 11/032, B29C 33/24

(54) **ANORDNUNG ZUR AUFNAHME EINER GIEßFORM MIT KOAXIALEM ANTRIEB UND VERFAHREN HIERZU**
ARRANGEMENT FOR RECEIVING A CASTING MOULD WITH COAXIAL DRIVE AND METHOD THEREFOR
ENSEMBLE DESTINÉ À RECEVOIR UN MOULE, PRÉSENTANT UN ENTRAÎNEMENT COAXIAL ET PROCÉDÉ ASSOCIÉ

(30) Priorität: 29.03.2011 DE 102011001615; 29.03.2011 DE 202011000708 U
(43) Veröffentlichungstag der Anmeldung: 05.02.2014
(73) Patentinhaber: Richter, Bodo, 57610 Altenkirchen (DE)
(72) Erfinder: RICHTER, Günter, 57610 Altenkirchen (DE)
(74) Vertreter: Schaumburg und Partner Patentanwälte mbB
(86) Internationale Anmeldenummer: PCT/EP2012/055627
(87) Internationale Veröffentlichungsnummer: WO 2012/130934

(56) Entgegenhaltungen:
- DE-A1-102005 010 396
- US-A1- 2002 180 132
- US-A1- 2006 163 776

## Beschreibung

Die Erfindung betrifft eine Anordnung zur Aufnahme einer Gießform. Ferner betrifft die Erfindung ein zugehöriges Arbeitsverfahren.

Es sind Anordnungen zur Aufnahme von Gießformen bekannt, die einen Grundrahmen haben, auf dem zwei plattenförmige Formaufspannelemente angeordnet sind, wobei mindestens ein Hydraulikzylinder vorgesehen ist, der über eine Ausgleichsmechanik eine gleichmäßige Verschiebebewegung der Formaufspannplatten bewirkt. Weiterhin ist ein Verriegelungssystem vorgesehen, um die Formaufspannplatten in einer bestimmten Position, zumindest während des Gießvorgangs, zu fixieren. Solche Anordnungen werden auch als holmlose Schließanlagen oder holmlose Schließeinheiten bezeichnet.

Derartige Anordnungen haben den Vorteil, dass beim Öffnen der Gießform und der anschließenden Artikelentnahme keine Holme störend den Funktionsablauf behindern. Ein weiterer Vorteil ist beim Wechsel der Gießform gegeben, da bei solchen Anlagen die Montage und Demontage der Gießformen störungsfrei und schnell und somit auch wirtschaftlich durchführbar sind.

Aus der WO 2006/094861 A1 ist eine Anordnung zur Aufnahme einer Gießform, gemäß dem Oberbegriff des Anspruchs 1, bekannt, bei der die Verriegelungselemente mit den Formaufspannelementen zusammenwirken und diese in der Position beim Gießvorgang fixieren. Eine solche Anordnung kann im Hinblick auf ihre Wirtschaftlichkeit, insbesondere im Hinblick auf die Antriebsmechanismen verbessert werden. Die Verriegelungselemente müssen bei jedem Öffnungs- und Schließvorgang lange Verfahrwege zurücklegen und während des Gießvorgangs in der Regel hohe Schließkräfte aufnehmen, wozu ein einziger hydraulischer Antrieb eingesetzt wird. Aufgrund der langen Verfahrwege müssen relativ hohe Hydraulikvolumina zwischen der Deckelseite und der Kolbenseite des zugehörigen Antriebszylinders hin und her bewegt werden. Dementsprechend ist der Zeitaufwand für die zurückzulegenden Verfahrwege groß und der gesamte Aufwand für die Hydraulik hoch.

Aufgabe der Erfindung ist es, eine Anordnung und ein Verfahren anzugeben, bei dem die Wirtschaftlichkeit verbessert ist.

Diese Aufgabe wird für eine Anordnung mit den Merkmalen des Anspruchs 1 gelöst. Vorteilhafte Weiterbildungen sind in den abhängigen Ansprüchen angegeben.

Gemäß der Erfindung hat die Antriebseinheit, welche das Verriegelungselement verschiebt, einen Hauptzylinder mit einem Hauptkolben und einen Fahrzylinder mit einem Fahrkolben, wobei der Fahrzylinder mit dem Hauptkolben des Hauptzylinders verbunden und mit diesem bewegbar ist. Die Kolbenstange des Fahrkolbens ist mit dem Verriegelungselement verbunden, bzw. das Verriegelungselement bildet selbst die Kolbenstange, und ist konzentrisch im Hauptkolben verschiebbar gelagert. Im Betriebszustand des Formens schlägt der Fahrkolben am Hauptkolben an, wobei der Hauptzylinder die Schließkraft bereitstellt, um beim Formen die Gießform geschlossen zu Halten.

Demgemäß wird bei der Erfindung ein Hauptzylinder verwendet, der zur Aufnahme der Schließkraft dient und andererseits zum Einrichten unterschiedlich großer Formeinbauhöhen verwendet wird. Für die Bewegung des Antriebs des Fahrkolbens im Fahrzylinder ist nur ein geringer Kraftaufwand erforderlich, um das Verriegelungselement entlang seines Weges zu bewegen. Vorzugsweise wird als Betriebsmittel für den Fahrzylinder Druckluft verwendet. Der Hauptkolben im Hauptzylinder benötigt nur einen kurzen Hub beim Zusammenfahren der Formhälften für die Gießform oder beim Öffnen der Gießform, so dass hierfür nur ein geringes Volumen an Hydraulik-Betriebsmittel, vorzugsweise Hydrauliköl aufgewendet werden muss. Der Hauptzylinder kann somit optimal an die gesamte Anordnung angepasst werden. Der hydraulische apparative Aufwand wird gering gehalten und es wird nur eine geringe Energiemenge verbraucht. Durch die kompakte Anordnung vom Hauptzylinder und Fahrzylinder wird zudem noch eine kompakte Anordnung erreicht.

Gemäß einem weiteren Aspekt der Erfindung wird ein Verfahren zum Betreiben der Anordnung angegeben. Beim Wechsel der Gießform erfolgt ein Einrichtvorgang für diese Gießform, insbesondere bezüglich deren Formeinbauhöhe, wobei der Hauptkolben des Hauptzylinders in eine Ausgangs-Position gebracht wird, von der aus der Hauptkolben nur geringe Hubbewegungen ausführen muss.

Bevorzugt wird die Anordnung und das Verfahren beim Blasformen eingesetzt.

Weiterhin wird die Anordnung bevorzugt für relativ große Artikel verwendet, die im Gießformverfahren, insbesondere im Blasformverfahren, hergestellt werden. Die Artikelgröße liegt hier im Bereich von 200 bis 10.000 Liter. Die typischen Schließkräfte sind im Bereich von 80 bis 600 Tonnen, und werden entsprechend der Anzahl der verwendeten Antriebe und Hauptzylinder auf diese aufgeteilt, beispielsweise derart, dass jeder Hauptzylinder eine Schließkraft im Bereich von 20 Tonnen bis 100 Tonnen aufbringt.

Die Anordnung nach der Erfindung ist für große Gießformen technisch relativ aufwändig und kostenintensiv, wobei ein wesentlicher wirtschaftlicher Faktor die Hydraulik für den Hauptzylinder bzw. die Hauptzylinder und hierbei insbesondere deren Längenabmessung ist. Ein wesentliches Maß ist hierbei die minimale Formeinbauhöhe und die maximale Formeinbauhöhe für die Blas- oder Gießform. Die Formeinbauhöhe einer Gießform entspricht dem Abstand zwischen den Formaufspannelementen bei geschlossener Gießform. Ein Ausführungsbeispiel der Erfindung sieht vor, dass bei einer Anlagen-Bauform mit einer minimalen Formeinbauhöhe und einer maximalen Formeinbauhöhe für eine Blas- oder Gießform der Hauptzylinder so bemessen ist, dass der maximale Hub des Hauptkolbens der Differenz aus maximaler Formeinbauhöhe und minimaler Formeinbauhöhe plus einem Reserveweg entspricht. Unter Berücksichtigung dieser Konstruktionsgrößen kann für unterschiedliche Blas- oder Gießformen eine optimale Anlagen-Bauform gewählt werden, bei der die Hydraulik für das Aufbringen der Schließkraft der Blas- oder Gießform einen kompakten Aufbau und hohe Wirtschaftlichkeit hat.

Ausführungsbeispiele der Erfindung werden nachfolgend anhand der Zeichnung beschrieben. Darin zeigt:
- Figur 1: eine Seitenansicht einer Anordnung zur Aufnahme verschiedener zweiteiliger Gießformen mit jeweils voll ausgefahrenen Verriegefungselementen,
- Figur 2: eine Seitenansicht der Anordnung nach Figur 1 mit voll eingefahrenen Verriegelungselementen,
- Figur 3: eine Seitenansicht der Anordnung nach den Figuren 1 und 2, bei der die Verriegelungselemente in geschlossener und verriegelter Form bei Aufnahme der größtmöglichen Gießform dargestellt sind,
- Figur 4: eine Ansicht der Anordnung nach der Figur 3 entlang der Schnittlinie A-A,
- Figur 5: eine Prinzipskizze ähnlich der Figur 3 bei der größtmöglichen Gießform im verriegelten Zustand,
- Figur 6: eine Prinzipskizze ähnlich der Figur 5 bei der größtmöglichen Gießform mit teilweise zurückgezogenen Verriegelungselement,
- Figur 7: eine Prinzipskizze ähnlich der Figuren 5 und 6 bei der größtmöglichen Gießform mit ganz eingezogenem Verriegelungselement,
- Figur 8: eine Prinzipskizze ähnlich der Figur 3 bei der kleinstmöglichen Gießform im verriegelten Zustand,
- Figur 9: eine Prinzipskizze ähnlich den Figuren 5 und 6 bei der kleinstmöglichen Gießform mit teilweise zurückgezogenem Verriegelungselement,
- Figur 10: eine Prinzipskizze ähnlich den Figuren 7 bis 9 bei der kleinstmöglichen Gießform mit ganz eingezogenem Verriegelungselement, und
- Figur 11: ein weiteres Schnittbild durch den Antrieb für das Verriegelungselement, bei dem der Zustand bei teilweise ausgefahrenem Verriegelungselement dargestellt ist.

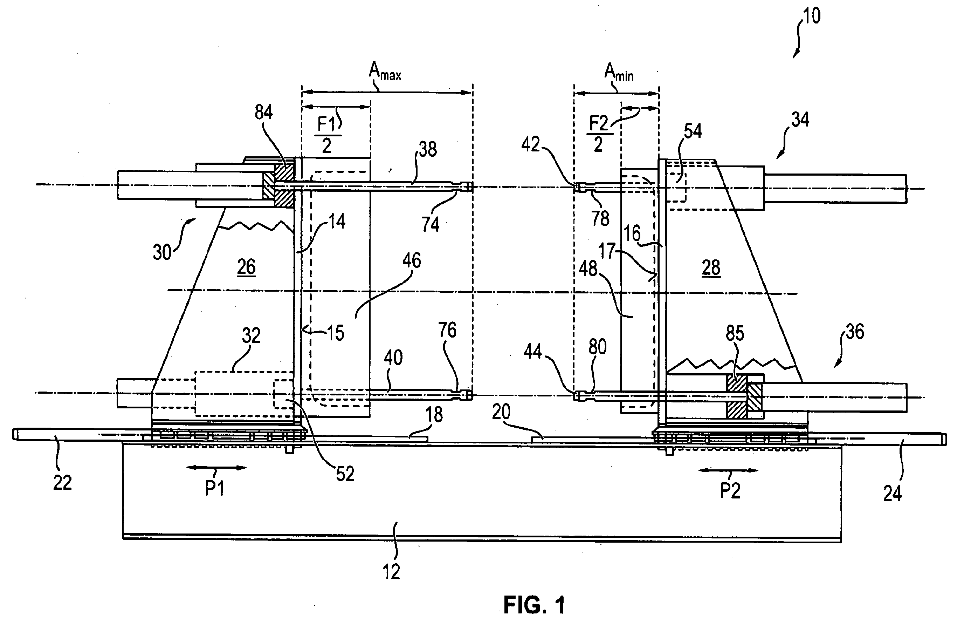

In den Figuren 1 bis 3 ist jeweils eine Seitenansicht einer Anordnung 10, auch Schließeinheit genannt, zur Aufnahme von Formteilen einer zweiteiligen Gießform dargestellt, die in einer Hohlkörper-Blasanlage zum Erzeugen blasgeformter Formteile aus Kunststoff genutzt wird. Diese Anordnung 10 hat keine Holme, die die Handhabung beim Öffnen und Schließen der Gießform zur Entnahme des blasgeformten Formteils oder beim Gießformwechsel behindern.

In der Figur 1 umfasst die Anordnung 10 einen Grundrahmen 12, auf dem plattenförmige Formaufspannelemente 14, 16 angeordnet sind, die jeweils in zwei Führungsschienen eingesetzt sind, von denen die Führungsschienen 18, 20 sichtbar sind. Mit Hilfe dieser Führungsschienen 18, 20 ist die Bewegung der Formaufspannelemente 14, 16 derart geführt, dass ihre Vorderseiten 15, 17 in Richtung der Pfeile P1 und P2 verschoben werden können, wobei diese Vorderseiten 15, 17 während des Verschiebevorgangs und nach dem Verschiebevorgang etwa parallel ausgerichtet sind.

Die Anordnung 10 hat zwei Hydraulikzylinder 22, 24, die zum Antrieb der Formaufspannelemente 14, 16 in Richtung der Pfeile P1 und P2 dienen, um diese zu verschieben. Die Hydraulikzylinder 22, 24 sind über Leitungen mit einem Hydrauliksystem der Hohlkörperblasanlage verbunden und werden mit Hilfe einer nicht dargestellten Steuereinheit über Ventile gesteuert. Die Formaufspannelemente 14, 16 haben jeweils zwei Versteifungselemente 26, 28, die auf der Rückseite der Formaufspannelemente 14, 16 angeordnet sind und von denen jeweils ein Versteifungselement 26, 28 in Figur 1 sichtbar ist.

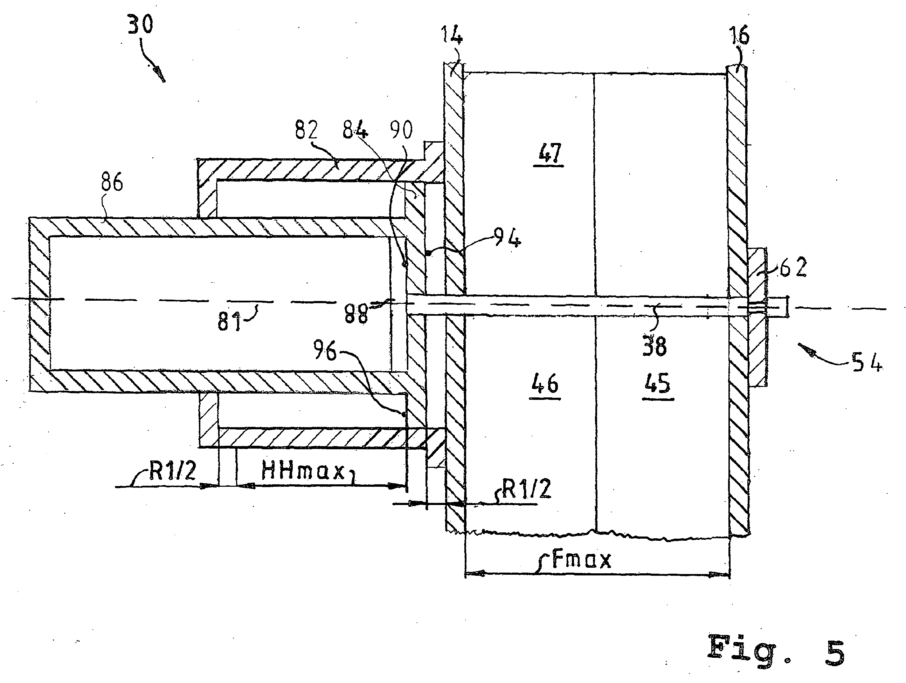

An der Rückseite der Formaufspannelemente 14,16 sind Antriebe 30, 32, 34, 36 für Verriegelungselemente 38, 40, 42, 44 angeordnet. Die Antriebe 30 und 36 sind als Schnittzeichnung dargestellt. Aufbau und Funktionsweise der Antriebe 30 bis 36 wird exemplarisch am Antrieb 30 weiter unten in den Figuren 5 bis 11 erläutert. Die Antriebe 30 bis 36 dienen zum Ein- und Ausfahren der Verriegelungselemente 38 bis 44 in eine voll oder teilweise ein- oder ausgefahrene Position.

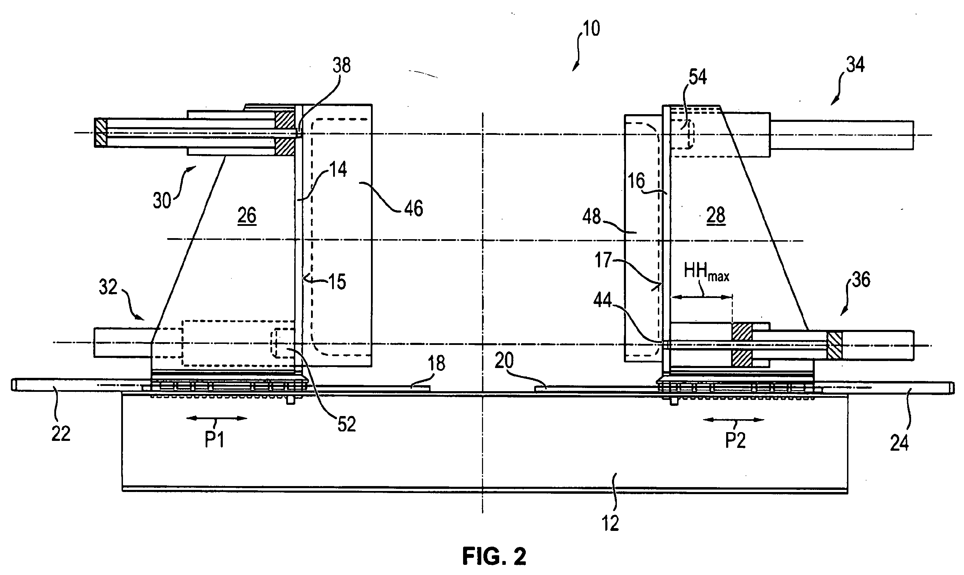

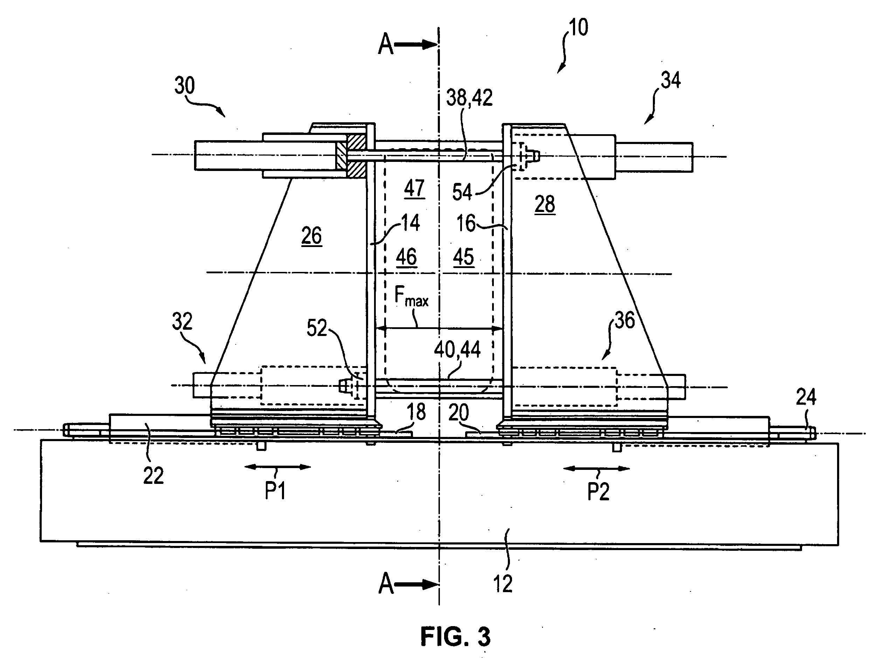

Die Formaufspannelemente 14, 16 halten eine mehrteilige Gießform, von der zwei Formhälften 46, 48 mit unterschiedlichen Formeinbauhöhen F1/2 und F2/2 für die resultierende Gießform gezeigt sind. Als Formeinbauhöhe F1, F2 einer Gießform wird, wenn die Form in eine Vorrichtung entsprechend der Figur 1 eingebaut ist, der Abstand der Vorderseiten 15, 17 der Formaufspannelemente 14, 16 bei geschlossener Gießform bezeichnet, wie in Figur 3 an Hand der Gießform 47 dargestellt ist. In der Figur 1 (und auch in Figur 2) sind jeweils nur die Hälften 46, 48 zweier verschiedener Gießformen dargestellt. In der linken Seite der Figur 1 wurde die Formhälfte 46 einer Gießform mit der größtmöglichen Formeinbauhöhe Fmax = F1 dargestellt, während auf der rechten Seite der Figur 1 die Formhälfte 48 einer Gießform mit der kleinstmöglichen Formeinbauhöhe Fmin = F2 dargestellt ist. Zu dieser maximalen bzw. minimalen Formeinbauhöhe Fmax bzw. Fmin sind jeweils Stellungen von Hauptkolben 84 bzw. 85 der zugehörigen Antriebseinheiten 30 bzw. 36 der Verriegelungselemente 38 bzw. 44 eingezeichnet. Eine genauere Beschreibung der Antriebseinheiten 30 bis 36, bei der auch der Zusammenhang zwischen der Position des jeweiligen Hauptkolbens und der Formeinbauhöhen erläutert wird, folgt wie erwähnt weiter unten in der Beschreibung der Figuren 5 bis 11.

Die Verriegelungselemente 38 bis 44 sind in Figur 1 jeweils in einer voll ausgefahrenen Position dargestellt. Abhängig von der Stellung des jeweiligen Hauptkolbens, z. B. der Hauptkolben 84 bzw. 85, ergibt sich eine maximale Ausfahrhöhe Amax bzw. eine minimale Ausfahrhöhe Amin. Der Unterschied zwischen der maximalen Ausfahrhöhe Amax der Verriegelungselemente 38 und 40 und der minimalen Ausfahrhöhe Amin der Verriegelungselemente 42 und 44 ist darin begründet, dass das Formaufspannelement 14 zur Aufnahme der Gießform mit der größtmöglichen Formeinbauhöhe Fmax (nur eine Formhälfte 46 mit der halben Formeinhauhöhe Fmax/2 = F1/2 ist dargestellt) eingerichtet ist, während das Formaufspannelement 16 zur Aufnahme der Gießform mit der kleinstmöglichen Formeinbauhöhe Fmin (nur eine Formhälfte 48 mit der halben Formeinhauhöhe Fmin/2 = F2/2 dargestellt) vorbereitet wurde.

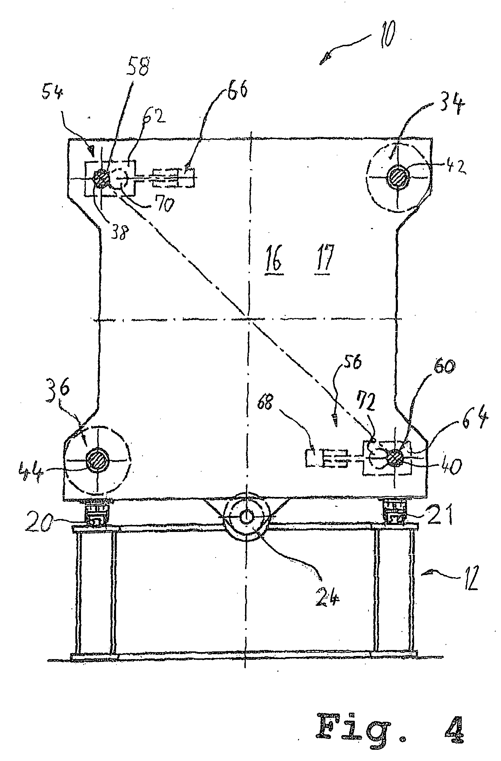

Jedem Verriegelungselement 38 bis 44 ist im gegenüberliegenden Formaufspannelement 14, 16 eine zum Querschnitt des Verriegelungselements 38 bis 44 komplementär ausgebildete Verriegelungsvorrichtung 50, 52, 54, 56 (nur 52 und 54 sind in Figur 1 zu sehen) vorgesehen, in die der vordere Teil des jeweiligen Verriegelungselements 38 bis 44 eingeführt werden kann und dadurch in das gegenüberliegende Formaufspannelement 14, 16 eingreift. Zwei Verriegelungsvorrichtungen 54, 56 werden exemplarisch bezüglich Lage und Funktion weiter unten in Verbindung mit der Figur 4 beschrieben.

In der in Figur 1 gezeitigten Ausführung der Anordnung 10 werden zum Schließen der Gießform jeweils mit den unterschiedlichen Formhälften 46 bzw. 48 beide Formaufspannelemente 14, 16 in Richtung der Pfeile P1, P2 zum jeweils gegenüberliegenden Formaufspannelement 14, 16 hin verschoben, bis die beiden an je einem Formaufspannelement 14, 16 befestigten Formhälften 46, 48 zur gesamten Gießform geschlossen sind. Anschließend werden die Verriegelungselemente 38 bis 44 mit Hilfe der Antriebe 30 bis 36 ausgefahren, bis die Verriegelungselemente 38 bis 44 in die jeweils gegenüberliegende Verriegelungsvorrichtung 50 bis 56 eingreifen und mit dem jeweiligen Formaufspannelement 14, 16 verriegeln. Eine Bewegung der Verriegelungselemente 38 bis 44 aus den Verriegelungsvorrichtungen 54 bis 60 aus dieser verriegelten und fixierten Position heraus ist dann nicht mehr möglich. Die antriebsseitige Fixierung der Verriegelungselemente 38 bis 44 wird später in Verbindung mit den Figuren 5 bis 11 beschrieben.

Die Verriegelung der Verriegelungselemente 38 bis 44 mit den Verriegelungsvorrichtungen 50 bis 56 in den beiden Formaufspannelementen 14, 16 dient dazu, die beim Gießformverfahren auf die Formaufspannelemente 14,16 nach außen wirkenden Kräfte aufzunehmen und das Entfernen der Formaufspannelemente 14, 16 und damit der Formhälften 46 bzw. 48 voneinander während des Gießformvorgangs zu verhindern. Dazu sind die Verriegelungselemente 38 bis 44 horizontal und vertikal versetzt zueinander um die Formhälften 46, 48 herum angeordnet. Durch das Vorsehen mehrerer Verriegelungselemente 38 bis 44 um die Gießform herum wird ein Auseinanderfahren der Formaufspannelemente 14, 16 und ein Verziehen während des Formvorgangs wirkungsvoll verhindert.

In Figur 2 ist die Anordnung 10 nach Figur 1 dargestellt, wobei gleiche Elemente gleiche Bezugszeichen haben, wie dies auch in den weiteren Figuren der Fall ist. Bei dieser in Figur 2 gezeigten Darstellung sind die Verriegelungselemente 38 bis 44 (dargestellt sind nur 38 und 44) komplett eingefahren, so dass sie in den Vorderseiten 15, 17 der Formaufspannelemente 14, 16 verschwinden. Die Formaufspannelemente 14, 16 selbst sind weiterhin, wie in Figur 1 bereits gezeigt, auseinander gefahren. In dieser Position kann die jeweils gesamte Gießform mit den Formhälften 46 bzw. 48 aus der Anordnung 10 entnommen werden und eine neue Gießform kann in die Anordnung 10 eingesetzt werden.

In Figur 3 ist die Anordnung 10 nach den Figuren 1 und 2 in einem geschlossenen Betriebszustand gezeigt. Im Unterschied zu den Figuren 1 und 2 ist hier die rechts dargestellte Formhälfte 45 gleich groß wie die Formhälfte 46 und sie ergeben zusammen eine Gießform 47 mit der maximalen Formeinbauhöhe Fmax. Die Formaufspannelemente 14, 16 sind in eine Gießposition gefahren, in der z.B. beim Blasformverfahren ein eingebrachter Formling geblasen wird. Daher bilden die beiden mit den Formaufspannelementen 14, 16 verbundenen Formhälften 45, 46 die geschlossene größtmögliche Gießform 47. Die Verriegelungselemente 38 bis 44 sind hier so weit ausgefahren, dass sie in die in der Vorderseite 15,17 des gegenüberliegenden Formaufspannelements 14, 16 vorgesehenen Verriegelungsvorrichtungen 50 bis 56 hineinragen und dort verriegelt sind.

In Figur 4 ist die Darstellung der Anordnung 10 entlang der Schnittlinie A-A in Figur 3, jedoch ohne die Gießform 47 dargestellt. Zu Erkennen sind Führungsschienen 20, 21, zu denen mittig der Hydraulikzylinder 24 angeordnet ist. Die Verriegelungselemente 38, 40 ragen jeweils in die gegenüberliegenden Öffnungen 58, 60 und sind mit Hilfe von Verriegelungsvorrichtungen 54, 56 mechanisch verriegelt. Die Verriegelungsvorrichtungen 54, 56 enthalten jeweils eine Metallplatte 62, 64 deren Bewegung mit Hilfe mindestens einer nicht dargestellten Führungsschiene geführt ist. Ferner enthält jede der Verriegelungsvorrichtungen 54, 56 einen Antrieb 66, 68, der im vorliegenden Ausführungsbeispiel ein hydraulischer Antrieb ist. Mit Hilfe des Antriebs 66, 68 kann die Metallplatte 62, 64 hin und her bewegt werden. Im Beispiel ist die Bewegungsrichtung horizontal und linear ausgeführt, aber auch andere Richtungen oder Bewegungsarten, z.B.: zirkular, sind denkbar. Die Metallplatte 62, 64 hat einen relativ großen runden Öffnungsbereich 70, 72, der sich nach einer Seite hin stufenartig verjüngt.

Zum Einführen des Verriegelungselementes 38, 40 in die Öffnung 58, 60 der Verriegelungsvorrichtung 54, 56 ist die Metallplatte 62, 64 mit Hilfe des Antriebs 66, 68 derart verschoben, dass die große runde Öffnung 70, 72 mit der Öffnung 58, 60 in der Vorderseite vom Formaufspannelement 16 übereinstimmt und das Verriegelungselement 38,40 in das Formaufspannelement 16 und durch die Metallplatte 62, 64 der Verriegelungsvorrichtung 54, 56 hindurchgeführt wird. Nachdem das Verriegelungselement 38, 40 in die Öffnung 58, 60 ragt und die Nut 74, 76 (dargestellt in Figur 1) in der Öffnung 70, 72 der Metallplatte 62, 64 positioniert ist, wird der Antrieb 66, 68 derart betätigt, dass die Metallplatte 62, 64 vom Antrieb 66, 68 verschoben wird, wodurch das vordere Ende des Verriegelungselementes 38, 40, in dem jeweils an der Oberseite und Unterseite eine Quernut 74, 76 vorgesehen ist, in die Metallplatte 62, 64 eingreift, so dass das jeweilige Verriegelungselement 38, 40 zumindest nicht mehr aus der Öffnung 58, 60 des Formaufspannelements 16 herausgezogen werden kann.

Im Formaufspannelement 14 verriegeln die Verriegelungselemente 42, 44 in den Verriegelungseinrichtungen 50, 52 nach dem gleichen Funktionsprinzip.

Die Verriegelungselemente 38 bis 44 sind vorzugsweise aus einem geeigneten Stahl hergestellte Rundprofile. Die Ausführung der Nuten 74, 76, 78, 80 (alle in Figur 1 dargestellt) kann in Form einer oder zwei Quernuten pro Verriegelungselement 38 bis 44 ausgeführt sein. Ebenso ist die Ausführung in Form einer Ringnut denkbar.

Die Antriebe 66, 68 können auch als elektrischer oder pneumatischer Antrieb ausgeführt sein.

In den Figuren 5 bis 10 ist eine Detailzeichnung des Antriebs 30 in verschiedenen Betriebszuständen gezeigt.

In der Figur 5 ist die genannte Gießform 47 mit größtmöglicher Formeinbauhöhe Fmax, bestehend aus den zwei Gießformteilen 45, 46, im verriegelten Zustand dargestellt. Auf der linken Seite der Gießform 47 befindet sich der Antrieb 30 für das Verriegelungselement 38, das seinerseits in der Verriegelungsvorrichtung 54, von der nur die Metallplatte 62 zu sehen ist, verriegelt ist. Verschiedene Bauteile wurden aus Gründen der Übersichtlichkeit nicht dargestellt.

Der Antrieb 30 ist in Form zweier verbundener Zylinder ausgeführt, wobei ein Zylinder am Kolben des anderen angeflanscht ist. Demgemäß ist ein Hauptzylinder 82 fest auf der Rückseite des Formaufspannelements 14 angeflanscht und wird hydraulisch betrieben. Die nicht dargestellten, aber zum Betrieb notwendigen Einlässe und Auslässe für die von Hydraulikleitungen geführte Hydraulikflüssigkeit, z.B. Hydrauliköl, sind derart angeordnet, dass der maximale Hub HHmax zuzüglich eines Reserveweges R1 vom Hauptkolben 84 des Hauptzylinders 82 erreicht wird. Der Reserveweg R1 verteilt sich in diesem Beispiel auf beide Seiten des Hauptzylinders 82 jeweils hälftig zu R1/2. Eine andere, nicht symmetrische Aufteilung des Reserveweges R1 ist möglich. Der Teil des Reserveweges R1 auf der Kolbenseite 94 vom Hauptkolben 84 des Hauptzylinders 82 dient beispielsweise zum Ausgleich von Bauteiltoleranzen der Anordnung 10, damit die gewünschten Formeinbauhöhen Fmin, Fmax auch sicher realisiert werden können und zur Bereitstellung eines Spiels. Der Reserveweg R1 liegt im Bereich von 20 mm bis 80 mm, vorzugsweise im Bereich von 30 mm bis 50 mm.

Der in Figur 5 gezeigte Hauptkolben 84 ist im Hauptzylinder 82 axial entlang der Achse 81 verschiebbar angeordnet. Mit dem Hauptkolben 84 ist ein Fahrzylinder 86 verbunden, z.B. auf der Deckelseite 96 des Hauptkolbens befestigt, so dass er mit dem Hauptkolben 84 bewegt wird. Dies bedeutet auch, dass der Fahrzylinder 86 gegenüber dem Hauptzylinder 82 axial zur Achse 81 verschiebbar gelagert ist.

Der Fahrzylinder 86 wird vorzugsweise pneumatisch betrieben. Die nicht dargestellten, aber zum Betrieb notwendigen Einlässe und Auslässe für die von Leitungen geführte Druckluft sind derart angeordnet, dass ein Fahrkolben 88 im Fahrzylinder 86 über dessen Länge axial entlang der Achse 81 verschiebbar ist. Ebenso sind die Anschlüsse der Leitungen am Fahrzylinder 86 so positioniert, dass die Bewegung des Fahrzylinders 86 im Hauptzylinder 82 nicht beeinträchtigt wird. Z.B. können die Zu- und Abführleitungen für die Druckluft innerhalb der Zylinderwand des Fahrzylinders 86 ausgeführt sein. Das Verriegelungselement 38 ist bei diesem Beispiel als Stange fest mit der Kolbenseite 90 vom Fahrkolben 88 verbunden. Alternativ kann mit dem Fahrkolben 88 eine Kolbenstange verbunden sein, mit der wiederum das stangenförmige Verriegelungselement 38 verbunden ist. Das Verriegelungselement 38 wird mit dem Fahrkolben 88 verschoben und ist daher gegenüber dem Hauptkolben 84 und dem Formaufspannelement 14 axial beweglich gelagert. Der Hauptzylinder 82 und der Fahrzylinder 86 werden mit Hilfe einer nicht dargestellten Steuereinheit über Ventile und Leitungen gesteuert. An der rechten Seite der Gießform 47 ist am Formaufspannelement 16 die bereits beschriebene Verriegelungsvorrichtung 58 angebracht. Deren Metallplatte 62 ist derart verschoben, dass das Verriegelungselement 38 verriegelt ist.

Der Antrieb 30 ist derart konstruiert, dass das Verriegelungselement 38, der Hauptzylinder 82, der Hauptkolben 84, der Fahrzylinder 86 und der Fahrkolben 88 konzentrisch zur Achse 81 angeordnet sind. Dadurch wirkt der Fahrzylinder 86 wie eine Zylinderstange im Hauptzylinder 82, während das Verriegelungselement 38 die Funktion einer Zylinderstange im Fahrzylinder 86 und im Hauptzylinder 82 hat. Wo sich relativ zueinander bewegliche Teile berühren, werden Dichtungsvorrichtungen (nicht dargestellt) verwendet, um den Austritt der Betriebsmedien, beispielsweise Hydraulikflüssigkeit oder Druckluft, aus den jeweiligen Zylindern zu unterbinden. Ebenfalls wird das Vorbeiströmen der Betriebsmedien an den jeweiligen Kolben 84, 88 durch an den Kolben 84, 88 angebrachte und nicht dargestellte Dichtungsvorrichtungen verhindert.

Im in Figur 5 gezeigten Betriebszustand ist die Anordnung 10 für die Aufnahme der Gießform 47 mit der größtmöglichen Einbauhöhe Fmax eingerichtet. In diesem Zustand ist der Hauptkolben 84 bis auf einen Teil des Reservewegs R1 an das Formaufspannelement 14 herangefahren. Das Verriegelungselement 38 ist voll ausgefahren, wobei die Kolbenseite 90 des Fahrkolbens 88 am Hauptzylinder 84 anschlägt. Die notwendige Schließkraft für die Gießform 47 wird durch den Hauptkolben 84 erzeugt, da der Fahrkolben 88 des Fahrzylinders 86 auf dem Hauptkolben 84 aufliegt. Der Hauptzylinder 82 ist hydraulisch mit Hydrauliköl betrieben und daher geeignet, in jeder Position des Hauptkolbens 84 im Hauptzylinder 82 die Schließkräfte aufzunehmen, die während des Gießvorgangs auftreten.

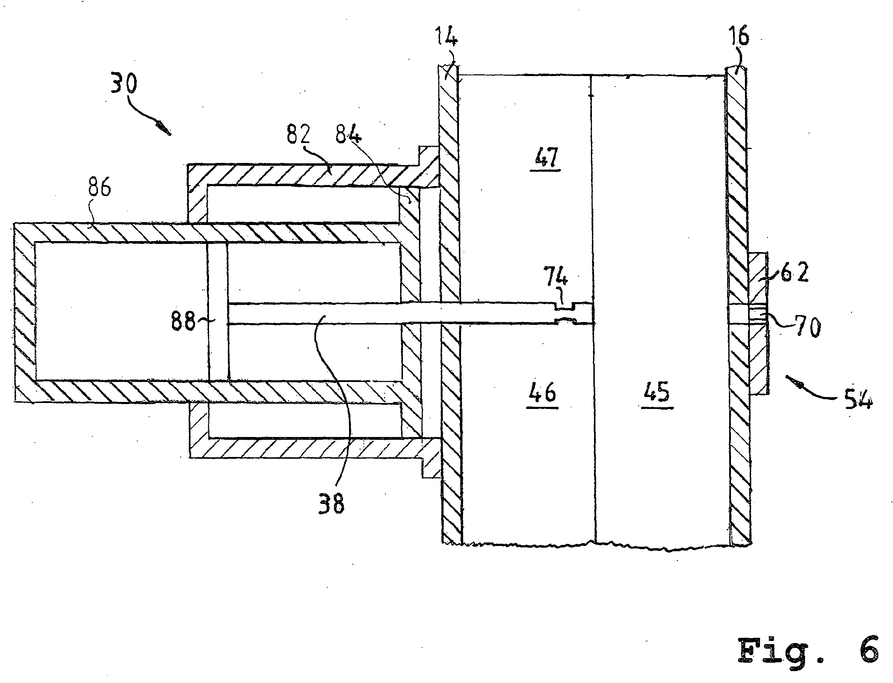

Der in Figur 6 gezeigte Betriebszustand unterscheidet sich von dem in der vorhergehenden Figur beschriebenen darin, dass die Verriegelungsvorrichtung 54 entsprechend dem in Figur 4 beschriebenen Verfahren entriegelt und das Verriegelungselement 38 in eine teilweise ausgefahrene Position zurückgezogen ist. In dieser Position kann, wenn die Formaufspannelemente 14, 16 mithilfe der Hydraulikzylinder 22, 24 (in dieser Figur nicht gezeigt) auseinander gefahren werden, der Formling aus der Gießform 47 entnommen werden. Der Hauptkolben 84 vom Hauptzylinder 82 kann im Wesentlichen in seiner Betriebsposition verharren.

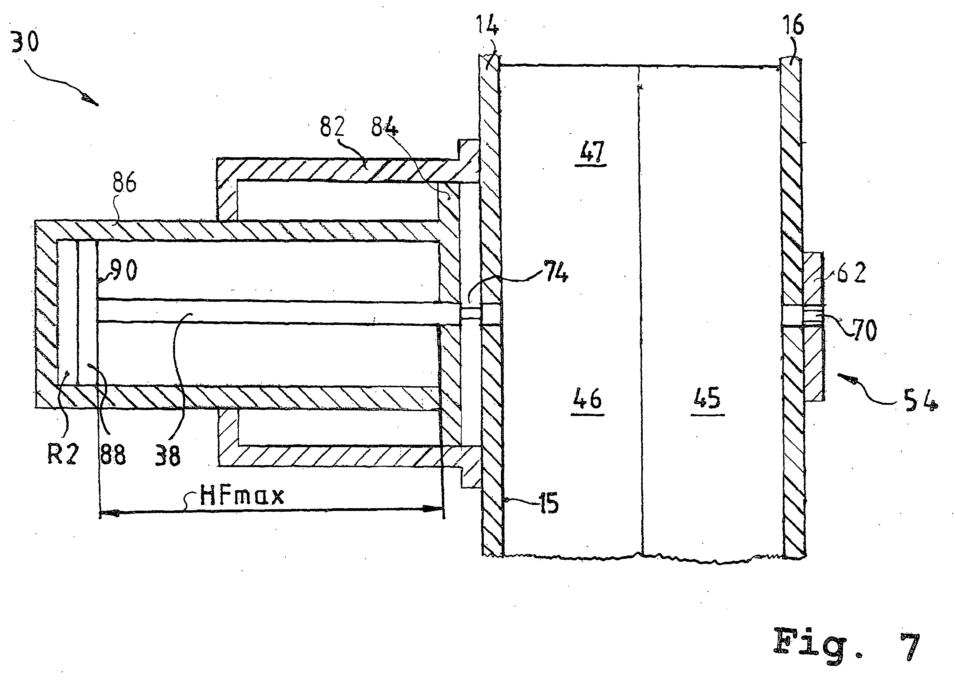

In Figur 7 wurde das Verriegelungselement 38 in eine eingefahrene Position zurückgezogen. Diese Position zeichnet sich dadurch aus, dass hier das Verriegelungselement 38 bündig mit der Vorderseite 15 des Formaufspannelements 14 abschließt. In dieser Position kann die Gießform 47 leicht gewechselt und gegen eine andere ausgetauscht werden. Wie ein Vergleich der Figur 7 mit den Figuren 5 und 6 zeigt, wurde der Hauptkolben 84 vom Hauptzylinder 82 kaum bewegt. Bei diesem Aufbau mit größtmöglicher Gießform 47 wird der maximale Hub HFmax des Fahrkolbens 88 benötigt. Ein Reserveweg R2 im Fahrzylinder dient als Spiel für Bauteiltoleranzen der Anordnung 10. Dieser Reserveweg R2 liegt im Bereich von 20 mm bis 80 mm, vorzugsweise im Bereich von 30 mm bis 50 mm.

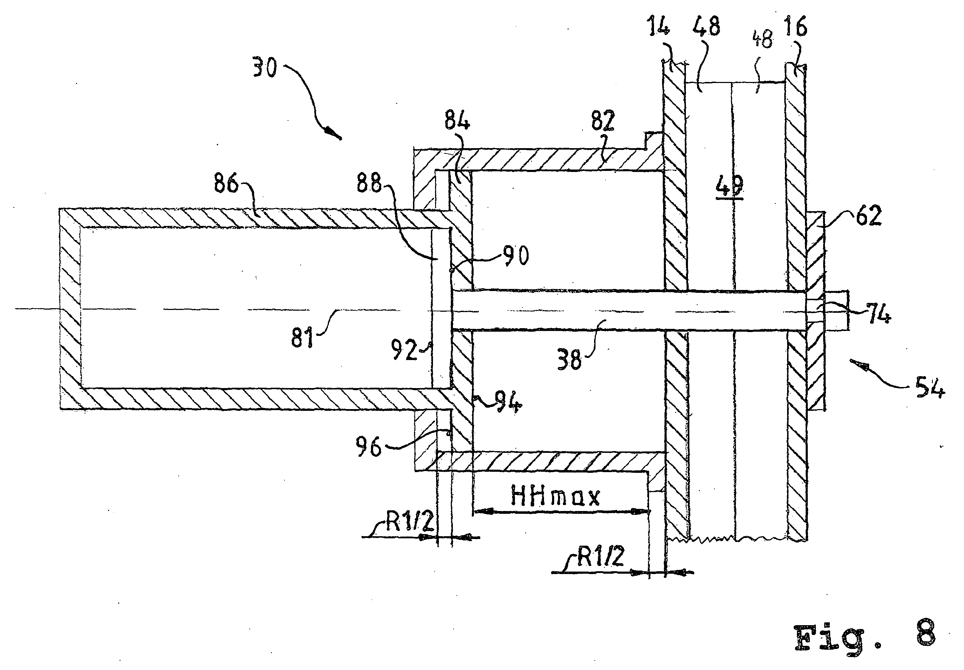

In der Figur 8 ist ein ähnlicher Zustand wie in der Figur 5 gezeigt. Abweichend von Figur 5 ist in Figur 8 eine kleinstmögliche Gießform 49 dargestellt. Der Hauptkolben 84 hat eine Position mit maximalem Hub HHmax. Die Kolbenseite 90 des Fahrkolbens 88 schlägt am Hauptkolben 84 an, wenn das Verriegelungselement 38 in der Verriegelungseinheit 54 verriegelt ist, so dass die Schließkräfte vom Hauptkolben 84 übertragen werden können. Um die Schließkräfte durch Druckbeaufschlagung des Hauptkolbens 84 auf seiner Kolbenseite 94 sicher aufbringen zu können, darf der Hauptkolben 84 nicht mit seiner Deckelseite 96 am Hauptzylinder 82 anschlagen. Demgemäß ist hier ein Teil des Reserveweges R1 vorgesehen.

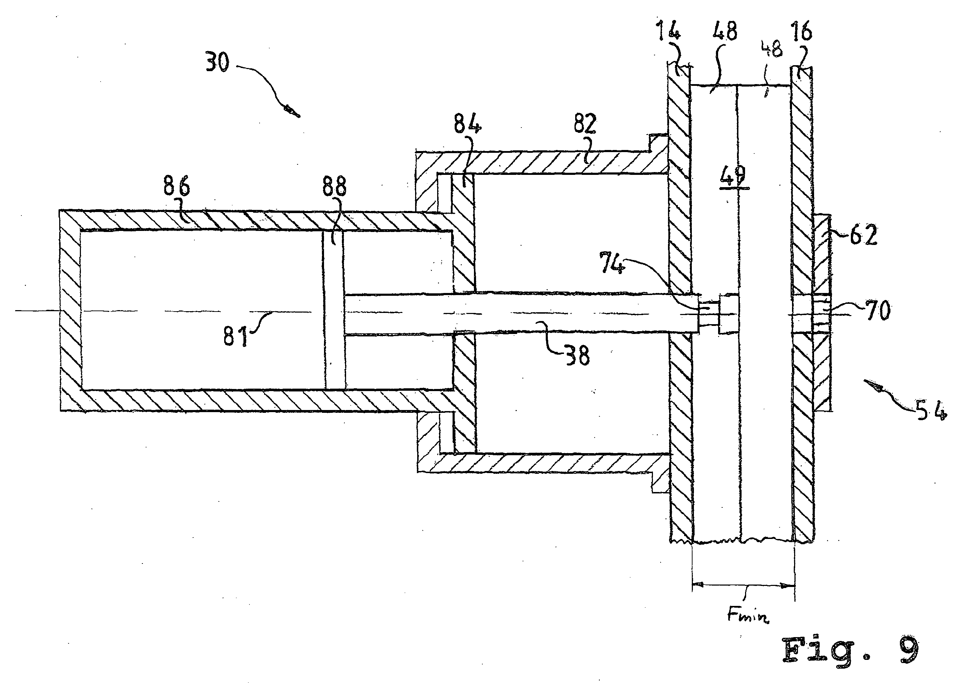

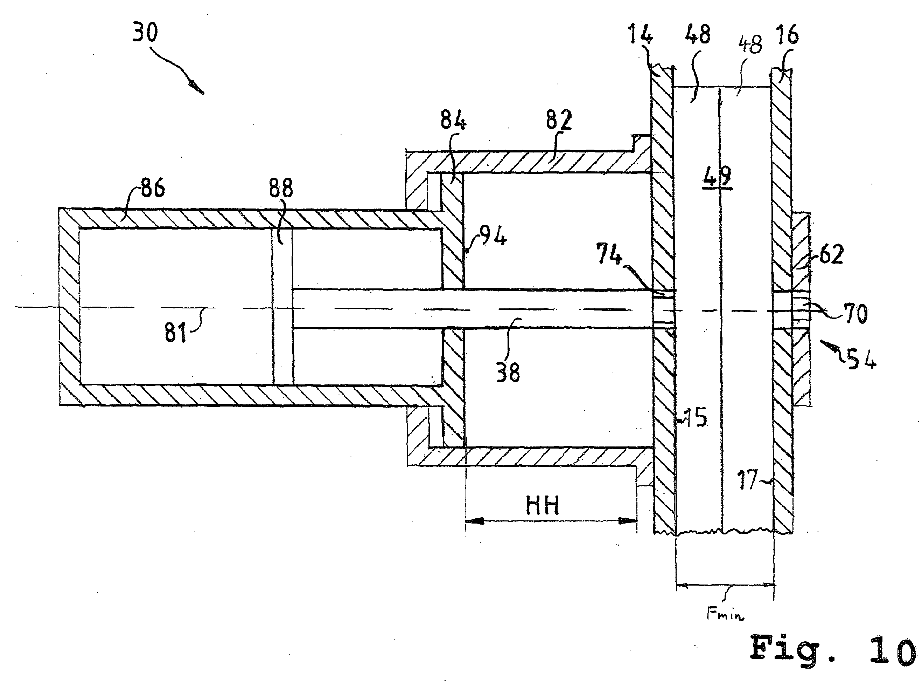

Die Figuren 9 bzw. 10 zeigen jeweils den in den Figuren 6 bzw. 7 dargestellten Betriebszustand, jedoch jeweils für die Gießform 49 mit der kleinsten Formeinbauhöhe Fmin. Zu erkennen ist hier im Vergleich zwischen den Figuren gleichen Betriebszustandes, also Figur 9 mit Figur 6 bzw. Figur 10 mit Figur 7, dass der Weg, den der Fahrkolben 88 zurücklegt, deutlich kleiner ist als bei der Gießform 47 mit der größten Formeinbauhöhe Fmax.

Nachfolgend wird beschrieben, wie eine Gießform gewechselt wird. Die verschiedenen Positionen vom Hauptkolben 84 im Hauptzylinder 82 und Fahrkolben 88 im Fahrzylinder 86 werden anhand der Figuren 5, 7, 8, 10 exemplarisch am Antrieb 30 des Verriegelungselements 38 und der Verriegelungsvorrichtung 54 gezeigt. Im Beispiel wird die Gießform 47 mit der maximalen Formeinbauhöhe Fmax durch die Gießform 49 mit der minimalen Formeinbauhöhe Fmin ersetzt.

Ausgehend von dem in Figur 5 gezeigten Zustand wird die Verriegelungsvorrichtung 54 mit dem bereits bei Figur 4 beschriebenen Verfahren entriegelt und der Fahrkolben 88 des Fahrzylinders 86 durch Zuführen von Druckluft auf seiner Kolbenseite 90 solange vom Hauptkolben 84 weg bewegt, bis das Verriegelungselement 38 die in Figur 7 gezeigte Position erreicht hat, in der das Verriegelungselement 38 in der Vorderseite 15 des Formaufspannelements 14 verschwindet. Dazu legt der Fahrkolben 88 seinen maximal notwendigen Verfahrweg A, der im gewählten Beispiel mit dem maximalen Hub HFmax übereinstimmt, zurück. Die Formaufspannelemente 14, 16 werden mit Hilfe der in Figur 1 gezeigten Hydraulikzylinder 22, 24 auseinander gefahren und geben die Gießform 47 bzw. die Formhälften 45, 46 frei. Die Gießform 47 bzw. die Formhälften 45, 46 sind leicht zu entfernen, weil das Verriegelungselement 38 bzw. sämtliche Verriegelungselemente 40 bis 44 nicht mehr die Entnahme dieser Gießform 47 behindern.

Im nächsten Schritt soll, wie in Figur 10 gezeigt, die neue Gießform 49 mit der kleinstmöglichen Formeinbauhöhe Fmin eingerichtet werden, wozu zunächst die Gießform 49 zwischen die Formaufspannelemente 14, 16 gebracht wird. Dabei wird jede Gießformhälfte 48 an je einer Vorderseite 15, 17 von den beiden Formaufspannelementen 14, 16 befestigt und diese Formaufspannelemente 14, 16 mit Hilfe der in Figur 1 gezeigten Hydraulikzylinder 22, 24 aufeinander zu gefahren, bis die Gießform 49 geschlossen ist. Der Antrieb 30 des Verriegelungselements 38 wird für die neue Gießform 49 eingerichtet, indem der Hauptkolben 84 des Hauptzylinders 82 durch Zuführen von Hydraulikflüssigkeit auf seiner Kolbenseite 94 vom Formaufspannelement 14 weg bewegt wird, bis sein Hub HH etwa der Differenz zwischen der Formeinbauhöhe der verwendeten Gießform, beim Beispiel die Formeinbauhöhe Fmin der kleinstmöglichen Gießform 49, und der Formeinbauhöhe Fmax der größtmöglichen Gießform 47 entspricht. Vorzugsweise kann gleichzeitig zur Bewegung des Hauptkolbens 84 der Fahrkolben 88 des Fahrzylinders 86 verfahren werden, so dass das Verriegelungselement 38 in seiner Lage zum Formaufspannelement 14 unverändert bleibt.

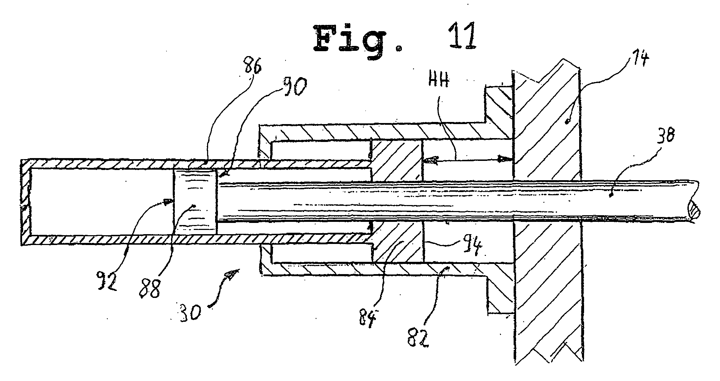

In Figur 11 ist ein Zustand dargestellt, bei dem der Hauptkolben 84 des Hauptzylinders 82 auf eine deutlich kleinere Gießform als die Gießform 47 mit der größtmöglichen Formeinbauhöhe Fmax, aber auf eine deutlich größere Gießform als die Gießform 49 mit der kleinstmöglichen Formeinbauhöhe Fmin, eingestellt ist. Der Hauptkolben 84 ist in eine mittlere Ausgangsposition bzw. Betriebsposition eingestellt, von der aus er die Schließkraft bei geschlossener Gießform erzeugt. Der Fahrkolben 88 des Fahrzylinders 86 ist in einer mittleren Stellung, in der sich das Verriegelungselement 38 in einem teilweise ausgefahrenen Zustand befindet. Gemäß der Einbauhöhe der bei diesem Beispiel verwendeten Gießform ist der Hauptkolben 84 in einer Ausgangsstellung, bei der der Hub HH des Hauptkolbens 84 größer als in den Figuren 5 bis 7 ist, aber noch deutlich kleiner als sein maximal möglicher Hub HHmax.

Während des Schließvorgangs der Gießform wird das Verriegelungselement 38 in die Verriegelungsvorrichtung 54 des gegenüberliegenden Formaufspannelements 16 eingeführt, indem sich der im Beispiel pneumatisch betriebene Fahrkolben 88 des Fahrzylinders 86 durch Druckbeaufschlagung auf seiner Deckelseite 92 sich auf den Hauptkolben 84 zu bewegt, bis er mit seiner Kolbenseite 90 am Hauptkolben 84 anschlägt. Das nun voll ausgefahrene Verriegelungselement 38 wird in der Verriegelungsvorrichtung 54 entsprechend dem in Verbindung mit Figur 4 beschriebenen Verfahren verriegelt. Anschließend wird auf der Kolbenseite 94 des Hauptkolbens 84 solange Druck aufgebaut, bis die notwendige Schließkraft für die Gießform erreicht ist. Durch den mechanischen Anschlag der Kolbenseite 90 des Fahrkolbens 88 am Hauptkolben 84 werden die Schließkräfte auch dann übertragen, wenn der Fahrzylinder 86 drucklos ist.

In der beschriebenen Anordnung 10 mit vier Verriegelungselementen 38 bis 44 werden die anderen Verriegelungselemente 40, 42, 44, dargestellt in Figur 1, ebenso verriegelt. Somit wird über jedes Verriegelungselement 38 bis 44 im Wesentlichen der gleiche Anteil der Schließkraft übertragen.

Anhand der Figur 11 wird nachfolgend das Öffnen der Gießform beschrieben. Hierzu wird zuerst eine Druckentlastung vom Hauptzylinder 82 durchgeführt. Dann wird die Verriegelungsvorrichtung 54 entsprechend dem bei Figur 4 beschriebenen Verfahren geöffnet. Der Fahrzylinder 86 des Fahrkolbens 88 wird nun auf seiner Kolbenseite 90 mit Druck beaufschlagt und dadurch vom Hauptkolben 84 weg bewegt, wodurch sich das Verriegelungselement 38 aus der Verriegelungsvorrichtung 54 löst und wieder bis in das Formaufspannelement 14 zurückgezogen werden kann. Dabei wird ein Fahrweg zurückgelegt, der so bemessen ist, dass die Vorderseite des Verriegelungselements 38 mindestens bis hinter die Tennfläche der Gießform zurückgezogen ist, wie dies beispielhaft in Figur 9 zu sehen ist. In diesem Zustand werden die Formaufspannelemente 15, 16 auseinandergefahren, wobei sich die Gießform öffnet und das Formteil entnommen werden kann. Ein Vorformling wird dann der geöffneten Gießform zugeführt, die Gießform wie beschrieben geschlossen und es erfolgt der Formprozess.

Neben dem beschriebenen Aufbau können noch weitere Ausführungen der Anordnung vorteilhaft sein. So kann eines der Formaufspannelemente 14, 16 fest mit dem Grundrahmen 12 verbunden sein, wobei die Bewegung zum Öffnen und Schließen der Gießform vom anderen Formaufspannelement 14, 16 ausgeführt wird. Des Weiteren können die Bewegungen der Formaufspannelemente 14, 16 mit Hilfe einer Ausgleichsmechanik derart gekoppelt werden, dass sie eine gleichmäßige Verschiebebewegung in Richtung der Pfeile P1 und P2 ausführen, wodurch eine synchrone Bewegung zum Öffnen und Schließen erzeugt wird. Zwei getrennt ansteuerbare Hydraulikzylinder 22, 24 zum Verschieben der Formaufspannelemente 14, 16 bieten jedoch den Vorteil, dass eine asynchrone Schließbewegung der Formaufspannelemente 14, 16 möglich ist, was insbesondere bei der Herstellung komplizierter Formteil- und Artikelgeometrien vorteilhaft ist.

Des Weiteren ist die Erfindung nicht auf die in Figur 4 dargestellten Verriegelungsvorrichtungen 50 bis 56 beschränkt. Vielmehr können beliebige geeignete Verriegelungsvorrichtungen 50 bis 56 zum Verriegeln des Verriegelungselementes 38 bis 44 mit dem jeweils gegenüberliegenden Formaufspannelement 14, 16 vorgesehen werden, die ein Herausziehen des Verriegelungselementes 38 bis 44 aus der Öffnung 58, 60 verhindem. Ferner können zum Verriegeln der Verriegelungselemente 38 bis 44 alternative Verriegelungsmittel vorgesehen werden, die vorzugsweise formschlüssig in das Verriegelungselement 38 bis 44 eingreifen. Vorzugsweise wird eine Rasterverbindung zwischen den Verriegelungselementen 38 bis 44 und jeweils mindestens einem Formaufspannelement 14, 16 erzeugt. Alternativ oder zusätzlich können auch bekannte Klemmverbindungen zum Fixieren der Verriegelungselemente 38 bis 44 vorgesehen werden.

Bei der Anordnung 10 nach Figur 4 sind insgesamt vier Verriegelungselemente 38 bis 44 vorgesehen. Die Formaufspannelemente 14, 16 haben eine im Wesentlichen rechteckige Vorderseite 15, 17, wobei die Verriegelungselemente 38 bis 44 jeweils diagonal gegenüberliegend an einer unteren und einer oberen Ecke angeordnet sind. In den zwei jeweils anderen diagonal gegenüberliegenden Ecken sind Verriegelungsvorrichtungen 50 bis 56 für die Aufnahme der Verriegelungselemente 38 bis 44 im jeweils gegenüberliegenden Formaufspannelement 14, 16 vorgesehen. Die Formaufspannelemente 14, 16 sind weiterhin identisch aufgebaut, so dass sie gegeneinander austauschbar sind.

Alternativ können die Verriegelungselemente 38 bis 44 auch an einem der Formaufspannelemente 14, 16 angeordnet sein, wobei am gegenüberliegenden Formaufspannelement 14, 16 dann für jedes dieser Verriegelungselemente 38 bis 44 Verriegelungsvorrichtungen 50 bis 56 vorgesehen sind. Die Anzahl der Verriegelungselemente 38 bis 44 ist bei anderen Ausführungsformen nicht auf vier festgelegt. Vielmehr kann die Anzahl der Verriegelungselemente 38 bis 44 abhängig von der Formgröße, den beim Gießvorgang auftretenden Kräften und der Dimensionierung der Verriegelungselemente 38 bis 44 festgelegt werden.

Es kann in einer weiteren Modifikation des Aufbaus sinnvoll sein, eine von 4 abweichende Anzahl von Verriegelungsvorrichtungen 50 bis 56 und Verrieglungselementen 38 bis 44 vorzusehen. Zu Beachten ist dabei nur, dass jedes Verriegelungselement 38 bis 44 in eine Verriegelungsvorrichtung 50 bis 56 eingreifen kann.

Anstatt der Hydraulikzylinder 22, 24 können auch andere hydraulische, pneumatische und elektrische Antriebe zum Verschieben der Formaufspannelemente 14, 16 auf dem Grundrahmen 12 vorgesehen werden.

Die Form der Formaufspannelemente 14, 16 kann auch andere Bauformen als die im Wesentlichen rechteckigen Formen umfassen und auch mehr oder weniger als zwei Versteifungselemente 26, 28 besitzen. Dies wird überwiegend von der Form der Gießform und den beim Gießvorgang notwendigen Schließkräften bedingt.

Die Antriebe 66, 68 der Verriegelungsvorrichtungen 50 bis 56 sind nicht auf einen hydraulischen Antrieb beschränkt, sondern können auch anders, insbesondere elektrisch oder pneumatisch realisiert werden.

In den gezeigten Ausführungsbeispielen schlägt der Fahrkolben 88 am Hauptkolben 84, 85 direkt an. Es ist auch möglich, ein Anschlagelement am Hauptkolben 84, 85 anzubringen, welches dann als Anschlag für den Fahrkolben 88 dient.

### Bezugszeichenliste

- 10: Anordnung
- 12: Grundrahmen
- 14, 16: Formaufspannelemente
- 15, 17: Vorderseite des Formaufspannelements 14, 16
- 18, 20, 21: Führungsschienen
- 22, 24: Hydraulikzylinder
- 26, 28: Versteifungselemente
- 30 bis 36: Antrieb der Verriegelungselemente 38 bis 44
- 38 bis 44: Verriegelungselement
- 45, 46: Halbe Gießform mit der größtmöglichen Formeinbauhöhe
- 47: Gießform mit der größtmöglichen Formeinbauhöhe
- 48: Halbe Gießform mit der kleinstmöglichen Formeinbauhöhe
- 49: Gießform mit der kleinstmöglichen Formeinbauhöhe
- 50 bis 56: Verriegelungsvorrichtung
- 58, 60: Öffnungen im Formaufspannelement 16
- 62, 64: Metallplatten
- 66, 68: Antrieb der Verriegelungsvorrichtungen 54, 56
- 70, 72: Öffnungen in den Metallplatten 62, 64
- 74 bis 80: Nut
- 81: Achse
- 82: Hauptzylinder
- 84, 85: Hauptkolben
- 86: Fahrzylinder
- 88: Fahrkolben
- 90: Kolbenseite des Fahrkolbens 88
- 92: Deckelseite des Fahrkolbens 88
- 94: Kolbenseite des Hauptkolbens 84
- 96: Deckelseite des Hauptkolbens 84
- Amax: maximale Ausfahrhöhe der Verriegelungselemente 38 bis 44
- Amin: minimale Ausfahrhöhe der Verriegelungselemente 38 bis 44
- F1, F2: Formeinbauhöhe einer Gießform
- Fmax: Formeinhauhöhe der größten Gießform 46
- Fmax/2: Halbe Formeinhauhöhe der größten Gießform 46
- Fmin/2: Halbe Formeinhauhöhe der kleinsten Gießform 48
- HFmax: maximaler Hub des Fahrkolbens 88
- HH: Hub des Hauptzylinders 82
- HHmax: maximaler Hub des Hauptkolbens 84
- P1, P2: Richtungspfeile
- R1: Reserveweg vom Hauptkolben 84
- R1/2: Halber Reserveweg vom Hauptkolben 84
- R2: Reserveweg vom Fahrkolben 88

## Patentansprüche

1. Anordnung zur Aufnahme einer mehrteiligen Gießform (47), insbesondere einer mindestens zweiteiligen Blasform (47),
mit mindestens zwei auf einem Grundrahmen (12) angeordneten Formaufspannelementen (14, 16), von denen zumindest ein Formaufspannelement (14, 16) auf dem Grundrahmen (12) verschiebbar angeordnet ist,
wobei die Vorderseiten (15, 17) der Formaufspannelemente (14, 16) im Wesentlichen einander zugewandt sind und jeweils mindestens ein Gießform-Element (46, 48) halten,
wobei mindestens eines der Formaufspannelemente (14,16) mindestens ein verschiebbares Verriegelungselement (38 bis 44) umfasst, das mit Hilfe einer Antriebseinheit (30 bis 36) aus einer ersten eingefahrenen Position in eine zweite ausgefahrene Position verschiebbar ist, in der das Verriegelungselement (38 bis 44) in eine in dem gegenüberliegenden Formaufspannelement (14, 16) vorgesehenen Verriegelungsvorrichtung (50 bis 56) eingreift und dort verriegelbar ist,
**dadurch gekennzeichnet, dass** die Antriebseinheit (30 bis 36) einen Hauptzylinder (82) mit einem Hauptkolben (84) und einen Fahrzylinder (86) mit einem Fahrkolben (88) umfasst, wobei der Fahrzylinder (86) mit dem Hauptkolben (84) des Hauptzylinders (82) verbunden und mit diesem bewegbar ist,
dass der Fahrkolben (88) eine Kolbenstange hat, die mit dem Verrieglungselement (38 bis 44) verbunden ist und konzentrisch im Hauptkolben (84) verschiebbar gelagert ist,
und dass im Betriebszustand des Formens der Fahrkolben (88) am Hauptkolben (84) anschlägt, wobei der Hauptzylinder (82) die Schließkraft bereitstellt, um beim Formen die Gießform geschlossen zu halten.

2. Anordnung nach Anspruch 1, **dadurch gekennzeichnet, dass** bei einer Anlagen-Bauform mit einer minimalen Formeinbauhöhe (Fmin) und einer maximalen Formeinbauhöhe (Fmax) für eine Blas- oder Gießform der Hauptzylindier (82) so bemessen ist, dass der maximale Hub (HHmax) des Hauptkolbens (84) der Differenz aus maximaler Formeinbauhöhe (Fmax) und minimaler Formeinbauhöhe (Fmin) plus einem Reserveweg (R1) entspricht.

3. Anordnung nach Anspruch 2, **dadurch gekennzeichnet, dass** der Reserveweg (R1) im Bereich von 20 mm bis 80 mm, vorzugsweise 30 mm bis 50 mm, liegt.

4. Anordnung nach Anspruch 1 oder 2, **dadurch gekennzeichnet, dass** bei einer Anlagen-Bauform mit einer maximalen Formeinbauhöhe (Fmax) für eine Blas- oder Gießform der Fahrzylinder (86) so bemessen ist, dass der maximale Hub (HFmax) des Fahrkolbens (88) der maximalen Formeinbauhöhe (Fmax) plus einem Reserveweg (R2) entspricht.

5. Anordnung nach Anspruch 4, **dadurch gekennzeichnet, dass** der Reserveweg (R2) im Bereich von 20 mm bis 80 mm, vorzugsweise 30 mm bis 50 mm, liegt.

6. Anordnung nach einem der vorherigen Ansprüche, **dadurch gekennzeichnet, dass** eine zweiteilige Gießform mit zwei Formhälften (46, 48) vorgesehen ist.

7. Anordnung nach einem der vorherigen Ansprüche, **dadurch gekennzeichnet, dass** das Verriegelungselement (38) direkt mit dem Fahrkolben (88) verbunden ist.

8. Anordnung nach einem der vorherigen Ansprüche, **dadurch gekennzeichnet, dass** das Verriegelungselement (38) über eine Kolbenstange mit dem Fahrkolben (88) verbunden ist.

9. Anordnung nach einem der vorherigen Ansprüche, **dadurch gekennzeichnet, dass** der Hauptzylinder (82) mit Hydrauliköl betrieben ist.

10. Anordnung nach einem der vorherigen Ansprüche, **dadurch gekennzeichnet, dass** der Fahrzylinder (86) mit Druckluft betrieben ist.

11. Verfahren zum Betreiben der Einheit nach einem der vorhergehenden Ansprüche,
bei dem beim Wechsel der Gießform ein Einrichten der Gießform (47) erfolgt, wobei der Hauptkolben (84) des Hauptzylinders (82) in eine Ausgangsposition gebracht wird, bei der der Fahrkolben (88) des Fahrzylinders (86) bei geschlossener Gießform (47) am Hauptkolben (84) anschlägt, wenn das zugehörige Verriegelungselement (38 bis 44) in die zugeordnete Verriegelungsvorrichtung (50 bis 56) eingreift und dort verriegelt wird,
bei dem beim Schließen dieser Gießform (47) der Fahrkolben (88) des Fahrzylinders (86) bewegt wird, bis dieser am Hauptkolben (84) anschlägt, das Verriegelungselement (38 bis 44) in die ihm zugeordnete Verriegelungsvorrichtung (50 bis 56) eingreift und verriegelt wird, und wobei anschließend der Hauptzylinder (82) mit Druck auf der Kolbeiseite (94) beaufschlagt wird, so dass die Schließkraft für die Gießform (47) beim Gieß- oder Blasvorgang bereitgestellt, wird,

12. Verfahren nach Anspruch 11, bei dem beim Öffnen der Gießform (47) zuerst eine Druckentlastung auf der Kolbenseite (94) des Hauptzylinders (82) vorgenommen wird, anschließend die Verriegelung der Verriegelungsvorrichtung (50 bis 56) entriegelt wird, danach das Verriegelungselement (30 bis 36) durch Bewegen des Fahrzylinders (86) hinter die Vorderseite (15, 17) des Formaufspannelements (14, 16), zurückgezogen wird.

## Claims

1. An arrangement for receiving a multi-part casting mold (47), in particular an at,least two-part blow mold (47),
with at least two mold clamping elements (14, 16) arranged on a base frame (12), at least one mold clamping element (14, 16) of which is arranged movably on the base frame (12),
wherein the front sides (15, 17) of the mold clamping elements (14, 16) substantially face each other and hold at least one casting mold element (46, 48) each,
wherein at least one of the mold clamping elements (14, 16) comprises at least one movable locking element (38 to 44) which is movable by means of a drive unit (30 to 36) from a first retracted position into a second extended position, in which the locking element (38 to 44) engages into a locking device (50 to 56) provided in the opposite mold clamping element (14, 16) and is lockable thereat,
**characterized in that** the drive unit (30 to 36) comprises a main cylinder (82) with a main piston (84) and a travel cylinder (86) with a travel piston (88), wherein the travel cylinder (86) is connected to the main piston (84) of the main cylinder (82) and is movable therewith,
that the travel piston (88) has a piston rod which is connected to the locking element (38 to 44) and is movably mounted in the main piston (84) in a concentric manner,
and that in the operating state of molding, the travel piston (88) strikes against the main piston (84), wherein the main cylinder (82) provides the locking force to keep the casting mold closed during molding.

2. The arrangement according to claim 1, **characterized in that** in an installation configuration with a minimum mold installation height (Fmin) and a maximum mold installation height (Fmax) for a blow or casting mold, the main cylinder (82) is dimensioned such that the maximum stroke (HHmax) of the main cylinder (84) corresponds to the difference between maximum mold installation height (Fmax) and minimum mold installation height (Fmin) plus a reserve distance (R1).

3. The arrangement according to claim 2, **characterized in that** the reserve distance (R1) lies in the range between 20 mm to 80 mm, preferably 30 mm to 50 mm.

4. The arrangement according to claim 1 or 2, **characterized in that** for an installation configuration having a maximum mold installation height (Fmax) for a blow or casting mold the travel cylinder (86) is dimensioned such that the maximum stroke (HFmax) of the travel piston (88) corresponds to the maximum mold installation height (Fmax) plus a reserve distance (R2).

5. The arrangement according to claim 4, **characterized in that** the reserve distance (R2) lies in the range between 20 mm to 80 mm, preferably 30 mm to 50 mm.

6. The arrangement according to one of the preceding claims, **characterized in that** a two-part casting mold with two mold halves (46, 48) is provided.

7. The arrangement according to one of the preceding claims, **characterized in that** the locking element (38) is directly connected to the travel piston (88).

8. The arrangement according to one of the preceding claims, **characterized in that** the locking element (38) is connected to the travel piston (88) via a piston rod.

9. The arrangement according to one of the preceding claims, **characterized in that** the main cylinder (82) is operated with hydraulic oil.

10. The arrangement according to one of the preceding claims, **characterized in that** the travel cylinder (86) is operated with compressed air.

11. A method for operating the unit according to one of the preceding claims,
in which when changing the casting mold, a set-up of the casting mold (47) is performed, wherein the main piston (84) of the main cylinder (82) is moved into an initial position, in which the travel piston (88) of the travel cylinder (86) strikes against the main piston (84) in the case of a closed casting mold (47), when the associated locking element (38 to 44) engages into the assigned locking device (50 to 56) and is locked thereat, in which when closing this casting mold (47), the travel piston (88) of the travel cylinder (86) is moved until it strikes against the main piston (84), the locking element (38 to 44) engages into the locking device (50 to 56) assigned thereto and is locked, and wherein thereafter pressure is applied to the main cylinder (82) on the piston side (94) so that the locking force for the casting mold (47) during the casting or blow operation is provided.

12. The method according to claim 11, in which when opening the casting mold (47), at first a decompression on the piston side (94) of the main cylinder (82) is performed, thereafter the locking of the locking device (50 to 56) is unlocked, afterwards the locking element (30 to 36) is retracted by moving the travel cylinder (86) behind the front side (15, 17) of the mold clamping element (14, 16).

## Revendications

1. Ensemble (10) destiné à recevoir un moule de coulée (47) en plusieurs parties, en particulier un moule de soufflage (47) présentant au moins deux parties,
comprenant au moins deux éléments de serrage de moule (14, 16) disposés sur un cadre de base (12), parmi lesquels au moins un élément de serrage de moule (14, 16) est monté mobile sur le cadre de base (12),
les faces avant (15, 17) des éléments de serrage de moule (14, 16) étant sensiblement tournées les unes vers les autres et maintenant chacune au moins un élément (46, 48) de moule de coulée,
au moins l'un des éléments de serrage de moule (14, 16) comprenant au moins un élément de verrouillage mobile (38 à 44), qui peut être déplacé à l'aide d'une unité d'entraînement (30 à 36) d'une première position rentrée dans une deuxième position sortie, dans laquelle l'élément de verrouillage (38 à 44) s'insère dans un dispositif de verrouillage (50 à 56) situé dans l'élément de serrage de moule (14, 16) opposé et peut y être verrouillé,
**caractérisé en ce que** l'unité d'entraînement (30 à 36) comprend un cylindre principal (82) muni d'un piston principal (84) et un cylindre mobile (86) muni d'un piston mobile (88), le cylindre mobile (86) étant relié au piston principal (84) du cylindre principal (82) et pouvant être déplacé avec ce dernier,
**en ce que** le piston mobile (88) comporte une tige de piston qui est reliée à l'élément de verrouillage (38 à 44) et est montée mobile de manière concentrique dans le piston principal (84),
et **en ce que** lorsque le moule se trouve en état de fonctionner, le piston mobile (88) frappe le piston principal (84), le cylindre principal (82) fournissant la force de fermeture permettant de maintenir le moule de coulée fermé lors du moulage.

2. Ensemble selon la revendication 1, **caractérisé en ce que** lorsque le modèle de l'installation présente une hauteur minimale de montage du moule (Fmin) et une hauteur maximale de montage du moule (Fmax) pour un moule de soufflage ou de coulée, le cylindre principal (82) est dimensionné de sorte que la course maximale (HHmax) du piston principal (84) correspond à la différence entre la hauteur maximale de montage du moule (Fmax) et la hauteur minimale du moule (Fmin) plus un trajet de réserve (R1).

3. Ensemble selon la revendication 2, **caractérisé en ce que** le trajet de réserve (R1) se situe dans la plage de 20 mm à 80 mm, de préférence 30 mm à 50 mm.

4. Ensemble selon la revendication 1 ou 2, **caractérisé en ce que** lorsque le modèle de l'installation présente une hauteur maximale de montage du moule (Fmax) pour un moule de soufflage ou de coulée, le cylindre mobile (86) est dimensionné de sorte que la course maximale (HFmax) du piston mobile (88) correspond à la hauteur maximale de montage du moule (Fmax) plus un trajet de réserve (R2).

5. Ensemble selon la revendication 4, **caractérisé en ce que** le trajet de réserve (R2) se situe dans la plage de 20 mm à 80 mm, de préférence 30 mm à 50 mm.

6. Ensemble selon l'une quelconque des revendications précédentes, **caractérisé en ce qu'**un moule en deux parties muni de deux moitiés (46, 48) est prévu.

7. Ensemble selon l'une quelconque des revendications précédentes, **caractérisé en ce que** l'élément de verrouillage (38) est relié directement au piston mobile (88).

8. Ensemble selon l'une quelconque des revendications précédentes, **caractérisé en ce que** l'élément de verrouillage (38) est relié au piston mobile (88) par une tige de piston.

9. Ensemble selon l'une quelconque des revendications précédentes, **caractérisé en ce que** le cylindre principal (82) peut être alimenté par de l'huile hydraulique.

10. Ensemble selon l'une quelconque des revendications précédentes, **caractérisé en ce que** le cylindre mobile (86) peut être alimenté par de l'air comprimé.

11. Procédé permettant de faire fonctionner l'unité selon l'une quelconque des revendications précédentes,
selon lequel, lors du remplacement du moule de coulée, une installation du moule de coulée (47) est mise en place, le piston principal (84) du cylindre principal (82) étant amené dans une position de départ, dans laquelle le piston mobile (88) du cylindre mobile (86), une fois le moule de coulée (47) fermé, frappe le piston principal (84), lorsque l'élément de verrouillage (38 à 44) associé s'insère dans le dispositif de verrouillage (50 à 56) associé et y est verrouillé,
selon lequel, lors de la fermeture de ce moule de coulée (47), le piston mobile (88) du cylindre mobile (86) est déplacé jusqu'à ce que ce dernier frappe le piston principal (84), l'élément de verrouillage (38 à 44) s'insère dans le dispositif de verrouillage (50 à 56) qui lui est associé et est verrouillé, puis le cylindre principal (82) étant sollicité par une pression sur la face (94) du piston, de sorte que la force de fermeture pour le moule de coulée (47) est fournie lors d'une procédure de coulée ou de soufflage.

12. Procédé selon la revendication 11, selon lequel, lors de l'ouverture du moule de coulée (47), une décompression commence à être mise en oeuvre sur la face de piston (94) du cylindre principal (82), puis le verrouillage du dispositif de verrouillage (50 à 56) est déverrouillé, après cela l'élément de verrouillage (30 à 36) est ramené en arrière par le déplacement du cylindre mobile (86) derrière la face avant (15, 17) de l'élément de serrage de moule (14, 16).
